# EUROPEAN PATENT APPLICATION

(11) **EP 2 023 549 A1**
(43) Date of publication of application: **11.02.2009**
(21) Application number: 07015720.1
(22) Date of filing: 09.08.2007
(51) Int. Cl.: H04L 12/56

(54) **Method and device for bandwidth sharing and communication system comprising such device**

(71) Applicant: Nokia Siemens Networks Oy, 02610 Espoo (FI)
(72) Inventor: Martinez dos Santos Gomez, Teresa, 3030-177 Coimbra (PT); De Frias Rebelo Nunes, Pedro Ricardo, 2795016 Linda-A-Velha (PT)
(74) Representative: Bruglachner, Thomas E.

(57) **Abstract**

A method and a device for bandwidth sharing among at least two communication paths in a network are provided, said method comprising the steps of (i) the at least two communication paths are each at least partially protected by a backup path; and (ii) at least one auxiliary path is determined for the backup path, wherein the at least one auxiliary path is used for bandwidth reservation.

## Description

The invention relates to a method and to a device for bandwidth sharing and to a communication system comprising such a device.

In computer networking and telecommunications, MultiProtocol Label Switching (MPLS) is a data-carrying mechanism that emulates some properties of a circuit-switched network over a packet-switched network (see [1]).

MPLS operates at an OSI Model layer that is generally considered to lie between traditional definitions of Layer 2 (data link layer) and Layer 3 (network layer), and thus is often referred to as a "Layer 2.5" protocol. It was designed to provide a unified data-carrying service for both circuit-based clients and packet-switching clients which provide a datagram service model.

MPLS can be used to carry different kinds of traffic, including IP packets, as well as native ATM, SONET, and Ethernet frames.

MPLS utilizes network resources in an advantageous way, in particular provide various quality of services in a multi service requirement network. MPLS networks use the fast mechanisms of an IP network, add traffic flow control and thereby accomplish connection oriented like services.

In case of failure (of a link or a network element) it is important to minimize collateral effects to remaining services.

A Resource ReSerVation Protocol (RSVP), see [2], described in RFC 2205, is a network layer protocol designed to reserve resources across a network for an integrated services Internet. According to RFC 2205 "RSVP does not transport application data but is rather an Internet control protocol, like ICMP, IGMP, or routing protocols".

RSVP provides receiver-initiated setup of resource reservations for multicast or unicast data flows with scalability and robustness.

RSVP can be used by either hosts or routers to request or deliver specific levels of quality of service (QoS) for application data streams or flows. RSVP defines how applications place reservations and how they can relinquish the reserved resources once the need for them has ended. RSVP operation will generally result in resources being reserved in each node along a path.

The "Traffic Engineering" extension of RSVP, referred to as RSVP-TE (see [3]) is described in RFC 3209. RSVP-TE generally allows the establishment of label switched paths (LSPs), taking into consideration network constraint parameters such as available bandwidth and explicit routes.

RFC 4090, "Fast Reroute Extensions to RSVP-TE for LSP Tunnels" (see [4]) describes inter alia Fast ReRoute (FRR) mechanisms and local repair techniques (one-to-one backup and facility backup).

The FRR mechanism allows LSP recovery within the range of milliseconds, using pre-establish backup paths set up via RSVP-TE.

The approach described in [5] suggests a mechanism to share bandwidth protection for FRR. This mechanism proposes the establishment of a pool of backup bandwidth on network links, providing a complete bandwidth protection upon failure detection, which is achieved by reserving backup tunnels to protect arcs and nodes. This solution requires static bandwidth segmentation into primary and backup bandwidth, disabling a dynamic allocation of backup bandwidth. A protected node calculates its bypass tunnels and has to send this information to the head end, which will then establish the bypass tunnel. Such exchange of information is not feasible via RSVT-TE and therefore requires a modification of the protocol or a different form of information exchange instead.

The **problem** to be solved is to provide an approach for bandwidth sharing in an efficient way that may utilize RSVP-TE.

This problem is solved according to the features of the independent claims. Further embodiments result from the depending claims.

In order to overcome this problem, a method for bandwidth sharing among at least two communication paths in a network is provided, said method comprising the following steps:
- the at least two communication paths are each at least partially protected by a backup path;
- at least one auxiliary path is determined for the backup path, wherein the at least one auxiliary path is used for bandwidth reservation.

This approach allows dynamic bandwidth reservation and allocation to be utilized for either communication path, in particular for the backup path of either communication path. It is in particular a solution to provide actual bandwidth (as reserved by the auxiliary path) for the backup path that is associated with a particular communication path. Further, there may be several backup paths for one or more communication path, in particular a communication path may be associated with more than one backup paths.

Preferably, when setting up the backup paths no actual bandwidth is reserved for this particular backup path.

Instead, bandwidth may be allocated for the auxiliary path which can be administered separately and/or in addition to the actual backup path. Hence, bandwidth can be assigned to an actual backup path in case of failure of a link or of a node (network element, e.g., a label switch router) from the auxiliary path.

The auxiliary path may be set up between two nodes, whereas the backup path may use bandwidth from multiple auxiliary paths.

This approach is compatible with existing signaling means, in particular with RSVP-TE.

In particular, the at least one auxiliary path refers to one path per hop and/or per link.

In particular, each of the at least two communication paths may be protected by a logical backup path.

Preferably there can be a logical 1:n relationship between communication path and backup path, i.e. each communication path may have several backup paths, whereas a backup path is associated with one communication path.

However, from a topological perspective backup paths may take (at least partially) the same route throughout a network which make them appear to be at least partially one backup path.

According to a different embodiment, the at least one auxiliary path provides bandwidth for at least a portion of the backup paths of the at least two communication paths.

In a different embodiment, the auxiliary path provides protection bandwidth to at least one communication path.

The terms path, communication path, backup path or auxiliary path may refer to a label switched path (LSP).

In another embodiment, the backup path is set up via a signaling protocol.

In a further embodiment, the backup path is set up without any bandwidth reserved in particular although the backup path is signalled with an indication for reservation of bandwidth.

In a next embodiment, the bandwidth for the at least one auxiliary path is reserved via the signaling protocol.

It is also an embodiment that the signaling protocol is a Resource Reservation Protocol, in particular RSVP-TE.

Pursuant to another embodiment, in case of failure along one of the at least two communication paths, traffic to be conveyed is directed via the backup path, wherein at least a portion of the bandwidth reserved by the at least one auxiliary path is used.

Hence, the bandwidth reserved for the at least one auxiliary path may in particular be assigned to the backup path in order to carry information instead of the faulty communication path.

According to an embodiment, the method as described is utilized for a one-to-one backup and/or for a facility backup.

According to another embodiment, the method can be utilized in an MPLS environment.

The problem is also solved by a device for bandwidth sharing comprising a processor unit that is arranged and/or equipped such that the method as described herein is executable on said processor unit.

In an embodiment, said device is a communication device, in particular a network element, a label switch router or a label edge router.

According to a next embodiment, said device is a point of local repair (PLR).

The problem stated above is further solved according by a communication system comprising the device as described.

Embodiments of the invention are shown and illustrated in the following figures:
- Fig.1: shows a first phase of a scenario of bandwidth sharing between backup paths of a network;
- Fig.2: shows a second phase of a scenario of bandwidth sharing between backup paths of a network;
- Fig.3: shows a flow chart comprising steps of a method for protection bandwidth sharing among at least two communication paths thereby setting up an auxiliary path;
- Fig.4: shows a flow chart comprising steps to be processed on an auxiliary path in case a communication path is disconnected.

The approach described herein in particular suggests using RSVP-TE for allowing bandwidth sharing between backup LSPs of different protected LSPs.

An auxiliary path (also referred to as "auxiliary LSP") is set up, in particular on each link of a protection path with its origin and end at the respective edge nodes of the link or path, for which the required backup bandwidth is (to be) reserved.

This auxiliary LSP is preferably not used for conveying traffic, instead it may be created to reserve bandwidth.

For each link utilizing an auxiliary LSP, the backup LSPs may not have to reserve bandwidth themselves, i.e., for such link (that also is covered by the auxiliary LSP) the corresponding backup LSP can be set up with no bandwidth reservation at all.

However, e.g., in case of a link failure, i.e. the first time a backup path is required to convey traffic for a broken link, the bandwidth required for traffic to be conveyed via this backup path has to be made available. For this purpose, the auxiliary LSP has been created with its egress LER being the LER of that same link, soliciting the same bandwidth amount required by the original backup LSP (which so far may have reserved no bandwidth as stated before).

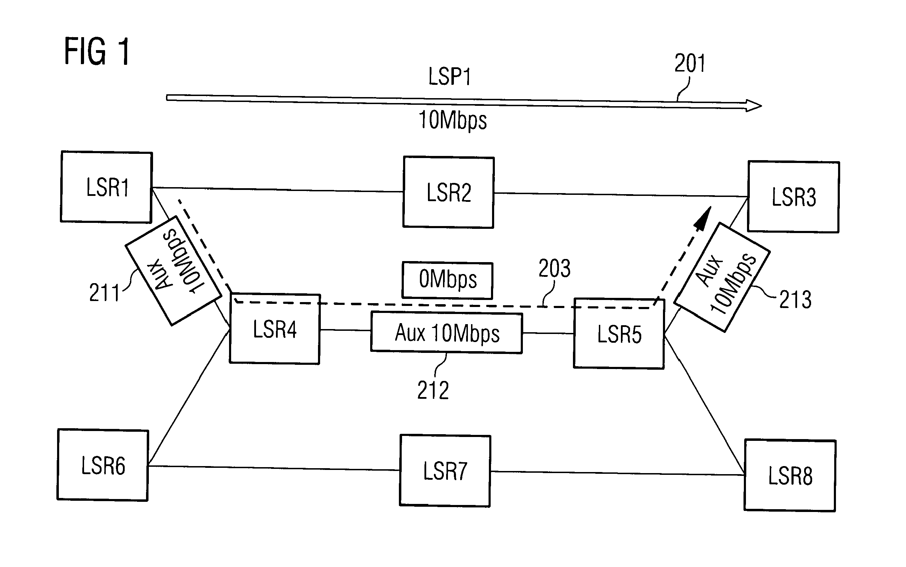

This scenario is depicted in **Fig.1** comprising Label Switch Routers LSR1 to LSR8, wherein LSR1 is connected via LSR2 to LSR3 and via LSR4 and LSR5 to LSR3. LSR6 is connected via LSR7 as well as via LSR4 and LSR5 to LSR8. Hence the link between LSR4 and LSR5 can be utilized for protecting LSPs
LSP1: LSR1 → LSR2 → LSR 3; and
LSP2: LSR6 → LSR7 → LSR8.

In the example of Fig.1, LSP1 requires a bandwidth of 10Mbps.

A Detour 203 (also referred to as "backup LSP") is set up reserving requesting 10Mbps of bandwidth:
Detour 203: LSR1 → LSR4 → LSR5 → LSR3.

Further, auxiliary LSPs for Detour 203 are defined reserving 10Mbps over links 211, 212 and 213 of Detour 203.

Although the auxiliary LSP is as such not used for conveying traffic, its bandwidth reserved is utilized by the backup LSP (i.e., the Detour 203) to transmit traffic in case of a link failure occurs between LSR1 and LSR2 or LSR2 and LSR3 or a failure occurs at LSR2.

The necessary bandwidth reserved for each auxiliary LSP, can be obtained by applying the method as described in [6] or by applying an equivalent method that is based on the same information model.

This approach may be repeated for every node of the backup path. Hence, whenever a link is used for a second time by a backup LSP that requires a bandwidth b1, the LSP source of that link is aware of the fact that only an additional bandwidth b2 may be needed (e.g., with b2 being lower or equal to b1) in order to appropriately protect an additional communication path. This is possible, because the backup LSP may use at least a part of a bandwidth that has already been reserved to protect another (first) communication path.

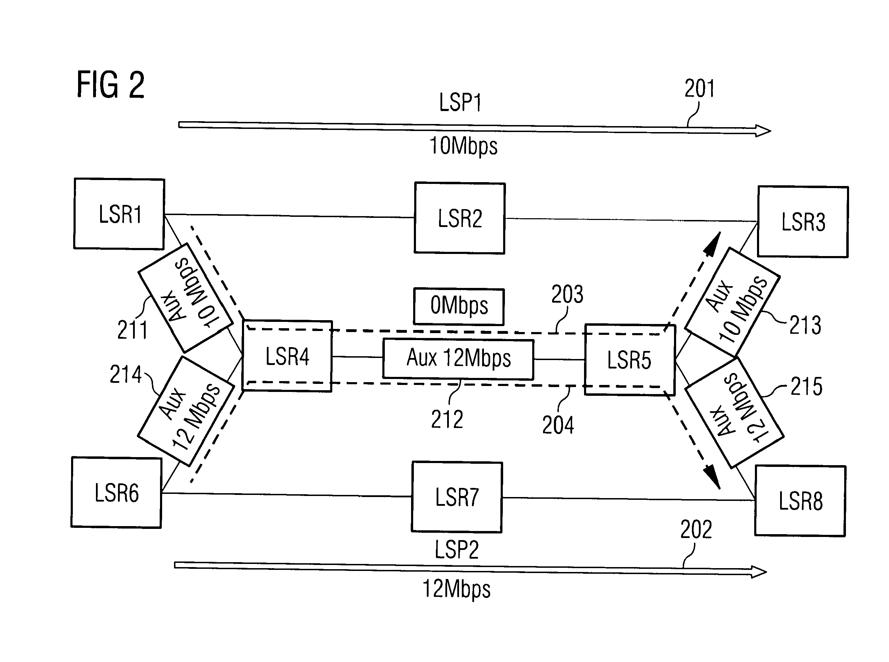

Such a scenario is visualized in **Fig.2**, which is based on Fig.1. In addition to the LSP1, LSP2 is shown for conveying traffic from LSR6 to LSR8 (each path LSP1 or LSP2 are also referred to as "communication path").

In the example of Fig.2, LSP2 requires a bandwidth of 12Mbps.

A Detour 204 (also referred to as "backup LSP") is set up requesting 12Mbps of bandwidth:
Detour 204: LSR6 → LSR4 → LSR5 → LSR8.

However, with regard to Fig.1 and the already established auxiliary LSP for Detour 203, the bandwidth of 10Mbps (corresponding to bandwidth b1 as stated before) has already been reserved for the link between LSR4 and LSR5.

Regarding the example mentioned supra, bandwidth b2 remaining according to Fig.1 amounts to 2Mbps.

The necessary bandwidth for each auxiliary LSP can be obtained by applying the method described in [6].

The value for b2 can be obtained, as the difference between the already reserved bandwidth and necessary bandwidth for the auxiliary LSP.

Further, an auxiliary LSP for Detour 204 is defined reserving 12Mbps over links 214 and 215 of Detour 204.

This procedure can be utilized by the RSVP-TE, with the enhancement that each LSR keeps (double) records regarding the requested backup LSP bandwidth and the effective reserved bandwidth using the auxiliary LSP. The latter information may be used by an Internal Gateway Protocol (IGP) (e.g., OSPF-TE or IS-IS-TE) to inform the network of the bandwidth reserved.

Preferably, the approach as described herein can be combined with MPLS FRR.

Furthermore, it is advantageous utilizing RSVP-TE FRR signaling as described in the next paragraphs to build the partial information model to use the method as specified in [6] and to achieve protection bandwidth sharing.

### Bandwidth sharing for FRR one-to-one backup

In such case, the bandwidth share between detours of different LSPs may not require to extend RSVP-TE signaling. Instead, bandwidth management capabilities can be supplemented within intermediate network elements or nodes, in particular at LSRs.

If a detour-object is sent within the initial path message for establishing the detour, it is possible to send an active LSP segment to protect.

Preferably, the detour-object is sent if the detour is signaled using the Path *Specific* method. Alternatively, it may be sent using the *Sender Template Specific* procedure.

A link or node protected by a detour is always known by a Point of Local Repair (PLR), which as such is an originating node of that detour. Thus, the PLR may determine a bandwidth to reserve for the first link (of the detour) taking in account the possibility to share such bandwidth with detours from various RSVP-TE sessions.

If a Detour Merge Point (DMP) exists that performs the fusion between various detours, that node will be responsible for creating a new detour-object with all its pairs (PLR, Avoid Node ID), that is to be transported by the joined detours. Hence, the DMP knows which links to be protected by the subsequent link (links belonging to the protected LSP) and all LSP links that explicitly use this same link as part of its respective backup path. This information may advantageously suffice to apply the method described in [6] or a similar method, which permits determination of an additional bandwidth that preferably needs to be reserved in that link for the specific detour.

In a network where node failure and link failure are considered, the necessary information to calculate the shareable backup bandwidth in detours is conveyed by the data pair (PLR, Avoid Node ID). In a given detour only the PLR knows if a protected LSP did or did not request node protection. A detour intermediate node may assume node protection if none of the Avoid Node ID in the Detour object belongs to its Explicit Route Object (ERO).

Therefore, in order to enable bandwidth sharing among detours of different LSPs, the LSPs as well as the detour-objects need to be signaled.

It is possible to share the backup bandwidth (to protect a link and/or node failure of an active LSP) in the first link used by the detour, since the PLR is aware of the fact whether the active LSP requested node protection, link protection or both. The intermediate nodes may infer which type of protection has been requested based on the ERO and based on the detour-object that may be part of a signaling message path:
a. If the detour ERO does not contain any Avoid Node ID (within the detour-object), the backup LSP intermediate nodes will assume that the active LSP requires node protection.
b. If the detour ERO received at an intermediate node contains for some nodes (but not for all) Avoid Node IDs (in the detour-object), this intermediate node of the backup LSP will act as if the active LSP had requested node protection for the node(s) for which no Avoid Node ID was conveyed in the detour ERO.
c. If the detour ERO received at an intermediate node contains for all nodes Avoid Node ID (in the detour-object) this intermediate node will assume that the active LSP does not require node protection, but only link protection.

This solution is compatible with a merging of detours (merged in one DMP) thereby enabling node protection, with detours that are capable of performing link protection only (for such links that belong to the corresponding detour-objects).

### Bandwidth sharing for FRR facility backup

The approach described may also be used to support bypass tunnels that are dynamically signaled. The backup bandwidth can be shared, and the bandwidth used by the backup paths may not belong to separate resources.

With detours being used, a path message is sent to establish a new backup LSP for every link or node of each protected LSP; when facility protection is used, the backup LSP (bypass tunnel) protecting a link will be the same for several (in particular all) active LSPs (requesting link protection) using this protected link.

The approach suggested herein may be used to explicitly share bandwidth in links common to different bypass tunnels protecting different resources.

A bypass NHOP (Next Hop) tunnel may be considered as follows:
a. The tunnel establishment message may solicit a bandwidth equal to the one required by the LSP it should protect.
   A detour-object can be included in the path message identifying the link protected by the tunnel. The nodes of the tunnel path may know that they are creating a new backup LSP when they recognize the detour-object.
   Subsequently, on every link the auxiliary LSPs may be created (if the auxiliary LSPs do not exist) by the nodes of the tunnel path, wherein the auxiliary LSPs may reserve a bandwidth that suffices to protect that tunnel.
   If a node of the tunnel path does not recognize the detour-object, the tunnel establishment will be refused and the PLR will be informed that it is not possible to signal the tunnel. Hence, traditional signaling may be performed.
b. Whenever a PLR that uses the facility backup method selects a bypass tunnel to protect an active LSP, the tunnel nodes may request an increase of bandwidth to a final value that equals a bandwidth sum of all LSP that need to be protected against link failure (PLR, IPv4 (or IPv6) tunnel end point address), including the bandwidth of the new LSP.
   A "make-before-break"-technique can be utilized in order to signal an increase of bandwidth for the tunnel, which will be reflected in the auxiliary LSP bandwidth.
   The path message, used in the bypass tunnel's bandwidth increase operation, may transport the detour-object to inform the LSPs of the link identity that is (to be) protected by this tunnel.
c. Whenever a protected LSP (using facility backup) is disconnected the "make-before-break"-technique can be used to signal the new bypass tunnel bandwidth, which will be reflected in bandwidth as reserved by the auxiliary LSPs.

Preferably, such path message does not carry a detour-object. The nodes of this LSP path are already aware of the bypass tunnel and, as there is no detour-object conveyed, these nodes recognize this request as a bandwidth "decrease" and will be able to update the auxiliary LSP's bandwidth accordingly.

In this case it is not necessary (and not possible without changing RSVP-TE signaling by creating new objects) to send the identity of each LSP that is to be protected: Whenever the bandwidth is increased, it is important to consider protecting a specific bandwidth amount belonging to a unique link. In addition, each intermediate node of a NHOP tunnel can check that its own egress LER (the PLM) coincides with the Avoid Node ID (in the detour-object) meaning that this is a backup tunnel protecting the particular link (PLR, Avoid Node ID).

The same approach may apply for Next-Next Hop (NNHOP) bypass tunnels, except that the intermediate nodes may recognize that an egress LER of such a tunnel (PLM) does not match an Avoid Node ID in the detour-object. Hence, the intermediate nodes may assume that they are protecting a failure of the node with an Avoid Node ID, and will use this information for calculating the shareable bandwidth.

### Further Advantages

The approach presented allows an MPLS network to share backup bandwidth without extending RSVP-TE signaling for FRR. Instead, this concept suggests providing additional functionality on the LSRs adjacent to the links where backup bandwidth sharing is needed. This allows the deployment of bandwidth sharing features in localized nodes within an already existing MPLS network thereby maintaining interoperability with the already existing network(s).

Another advantage is that this approach can be implemented in and/or associated with the FRR and it may cover the possibility that the backup is directed to the resource (facility backup) as well as the possibility that the backup is directed to the LSP (one-to-one backup). Hence, detours sharing bandwidth are supported even when associated with uncorrelated LSPs; the LSPs can be treated independently from one another.

In this approach the bandwidth allocation for primary as well as for backup traffic is treated dynamically. The protection path (detour or bypass tunnel) can be calculated and/or determined and signaled by the head end of the protection path. Bandwidth is reserved by auxiliary LSPs in each link used by a protection path thereby utilizing a bandwidth available over a particular link. Hence, this concept advantageously helps to overcome any kind of static (permanent) reservation of bandwidth that is inflexible when it is required to (temporarily) protect a different link.

Also, this mechanism has the advantage that it can be applied to a subset of traffic classes. If it is necessary, a part of such traffic classes throughout the network can still be protected using conventional FRR approaches for bandwidth sharing purposes.

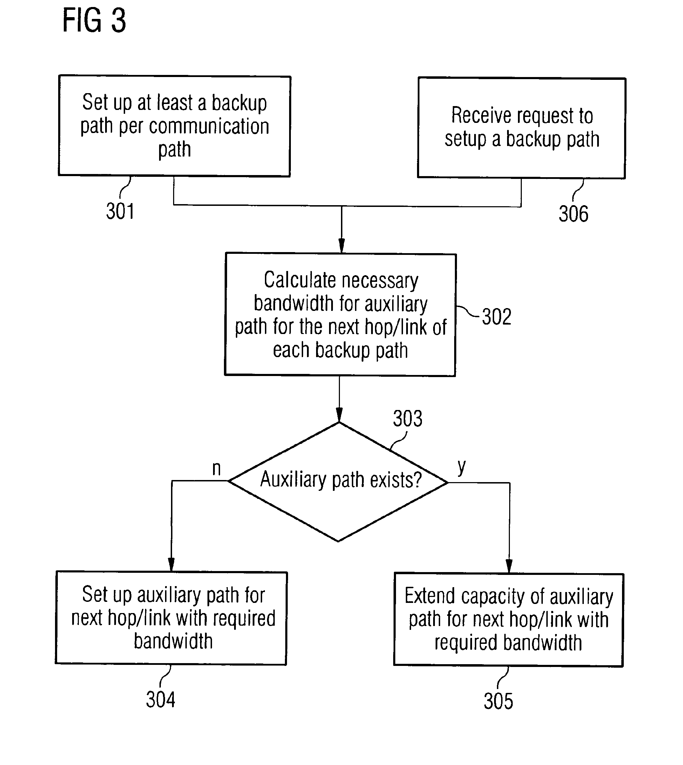

**Fig.3** shows steps of a method for bandwidth sharing among at least two communication paths in a network. Such network may in particular an MPLS driven network or a network that may support MPLS.

In a step 301, at least one backup path is set up per communication path. In a step 306 a request is received to setup a backup path. In a subsequent step 302, a required amount of bandwidth is determined for an auxiliary path for a next hop and/or link of each backup path. In a step 303 it is checked whether an auxiliary path yet exists. In the affirmative, a step 305 is processed according to which a capacity for the auxiliary path is extended for the subsequent hop and/or link according to the bandwidth required. If no such auxiliary path does exist, an auxiliary path for a next hop and/or link is set up in a step 304.

Hence, such at least one backup path may be set up or installed for such purpose. Particularly, a signaling protocol, e.g., RSVP-TE, can be used to administer paths (label switched paths, LSPs).

In case of a failure of a link or network element along the communication path, bandwidth along a backup path is required to redirect the traffic via a detour. Hence, the bandwidth allocated by the at least one auxiliary path is utilized to administer traffic rerouting via the backup path.

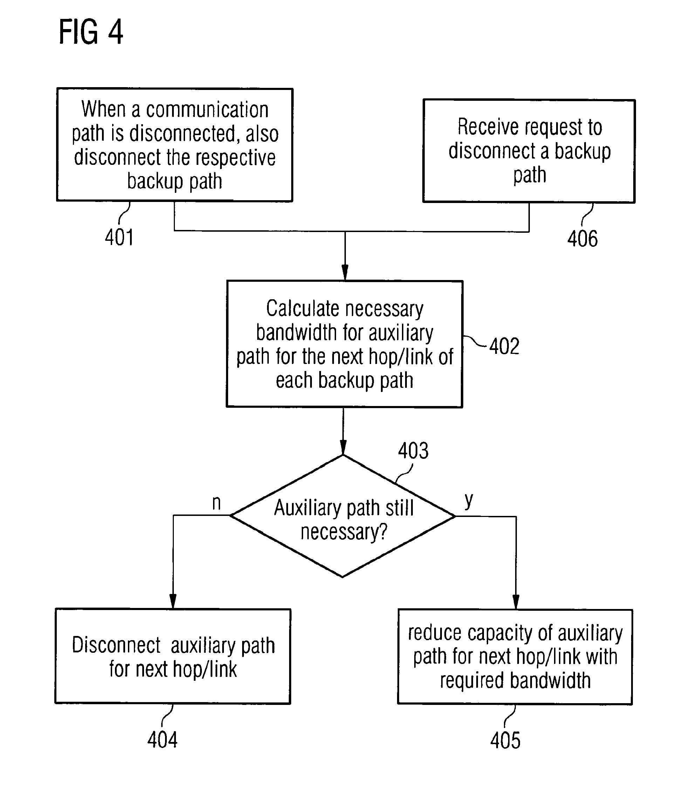

**Fig.4** shows steps of a method for bandwidth sharing among at least two communication paths in a network upon disconnection of a communication path. Such network may in particular an MPLS driven network or a network that may support MPLS.

In a step 401 upon disconnection of a communication path, a corresponding backup path is also disconnected. In a step 406 a request is received to disconnect a backup path. In a subsequent step 402, a required amount of bandwidth is determined for an auxiliary path for a next hop and/or link of each backup path. In a step 403 it is checked whether an auxiliary path is still required. In the affirmative, a step 405 is processed according to which a capacity for the auxiliary path is reduced for the subsequent hop and/or link according to the bandwidth required. If no such auxiliary path is still required, the auxiliary path for a next hop and/or link is disconnected in a step 404.

### Abbreviations:

- DMP: Detour Merge Point
- ERO: Explicit Route Object
- FRR: Fast ReRoute
- IGP: Internal Gateway Protocol
- IS-IS: Intermediate System to Intermediate System
- LER: Label Edge Router
- LSP: Label Switched Path
- LSR: Label Switch Router
- MPLS: MultiProtocol Label Switching
- NHOP: Next Hop
- NNHOP: Next-Next Hop
- OSPF: Open Shortest Path First
- PLM: Point of Local Merge
- PLR: Point of Local Repair
- PML: Protection Merge LSR
- RSVP: Resource Reservation Protocol
- TE: Traffic Engineering

### References:

[1] Wikipedia:
   http://en.wikipedia.org/wiki/Multiprotocol_Label_Swit ching
[2] Wikipedia:
   http://en.wikipedia.org/wiki/Resource_reservation_pro tocol
[3] Wikipedia:
   http://en.wikipedia.org/wiki/RSVP-TE
[4] RFC 4090: http://www.ietf.org/rfc/rfc4090.txt
[5] WO 03/060745 A1
[6] M. Kodialam, T. Lakshman: Dynamic Backup Routing of Network Tunnel Paths for Local Restoration in a Packet Network, US 2002/0067693 A1

## Claims

1. A method for bandwidth sharing among at least two communication paths in a network comprising the following steps:
- the at least two communication paths are each at least partially protected by a backup path;
- at least one auxiliary path is determined for the backup path, wherein the at least one auxiliary path is used for bandwidth reservation.

2. The method according to claim 1, wherein the at least one auxiliary path provides bandwidth for at least a portion of the backup paths of the at least two communication paths.

3. The method according to any of the preceding claims, wherein the backup path is set up via a signaling protocol.

4. The method according to claims 3, wherein the backup path is set up without any reservation of bandwidth.

5. The method according to any of claims 3 or 4, wherein bandwidth for the at least one auxiliary path is reserved via the signaling protocol.

6. The method according to any of claims 3 to 5, wherein the signaling protocol is a RSVP-TE.

7. The method according to any of the preceding claims, wherein in case of failure along one of the at least two communication paths, traffic to be conveyed is directed via a backup path, wherein at least a portion of the bandwidth reserved by the at least one auxiliary path is used.

8. The method according to any of the preceding claims utilized for a one-to-one backup.

9. The method according to any of the preceding claims utilized for a facility backup.

10. The method according to any of the preceding claims utilized in an MPLS environment.

11. A device for bandwidth sharing comprising a processor unit that is arranged such that the method according of any of the preceding claims is executable on said processor unit.

12. The device according to claim 11, wherein said device is a communication device, in particular a network element, a label switch router or a label edge router.

13. The device according to any of claims 11 or 12, wherein said device is a point of local repair.

14. Communication system comprising the device according to any of claims 11 to 13.
